# EUROPÄISCHE PATENTANMELDUNG

(11) **EP 1 632 416 A1**
(43) Veröffentlichungstag der Anmeldung: **08.03.2006**
(21) Anmeldenummer: 04020939.7
(22) Anmeldetag: 03.09.2004
(51) Int. Cl.: B62B 7/08

(54) **Zusammenklappbarer Kinderwagen**

(71) Anmelder: Haeggberg, Christian, 9602 Bazenheid (CH)
(72) Erfinder: Haeggberg, Christian, 9602 Bazenheid (CH)
(74) Vertreter: Hepp, Dieter

(57) **Zusammenfassung**

Zusammenklappbarer Kinderwagen mit einem Sitzelement (1), einer Rückenlehne (2), einer ersten Halterung (3) für mindestens ein Vorderrad (5), einer zweiten Halterung (4) für mindestens zwei Hinterräder (6) und einer Schiebevorrichtung (8) und einer Klappvorrichtung (7). Das Sitzelement (1), die Rückenlehne (2) sowie die erste (3) und die zweite Halterung (4) sind jeweils einseitig und um diese schwenkbar an der Klappvorrichtung (7) befestigt. Die Klappvorrichtung (7) weist Drehgelenke zum Verschwenken des Sitzelements (1), der Rückenlehne (2) sowie der ersten (3) und zweiten Halterung (4) auf.

## Beschreibung

Die Vorrichtung betrifft einen zusammenklappbaren Kinderwagen mit einer aus Drehgelenken bestehenden Klappvorrichtung gemäss dem unabhängigen Patentanspruch.

Zusammenklappbare Kinderwagen sind Platz sparend aufbewahrbar und transportierbar und bieten deshalb eine sinnvolle Alternative zu starren Kinderwagen. Eine Vielzahl von zusammenklappbaren Kinderwagen ist bereits bekannt. Der Klappmechanismus ist bei den meisten als Schermechanismus ausgebildet. Ein Beispiel für so einen Kinderwagen ist in EP 0 908 730 offenbart. Schermechanismen haben aber den Nachteil, dass die Länge des Kinderwagens beim zusammenklappen nicht verkleinert wird. Insbesondere, wenn der Kinderwagen als Fluggepäck mitgenommen werden soll, ist das ein Problem. Ausserdem sind die Winkel zwischen den Schergelenken aneinander gekoppelt, so dass nicht beliebige Einstellungen zwischen der Sitzfläche, der Rückenlehne und den Halterungen für die Vorder- und Hinterräder möglich sind.

Aus DE 196 54 569 ist ein zusammenklappbarer Kinderwagen bekannt, bei dem die Neigung der Rückenlehne verstellt werden kann, ohne dass die Neigung der Sitzfläche verändert wird. Die Klappmechanik dieses Kinderwagens ist aber aufwendig und weist den gleichen Nachteil auf, wie übliche Schermechaniken: Die Länge des Kinderwagens im zusammengeklappten Zustand ist nicht kleiner als im Betriebszustand.

Es ist die Aufgabe der Erfindung, einen zusammenklappbaren Kinderwagen zu schaffen, der die Nachteile des Bekannten vermeidet, der sich insbesondere klein zusammenlegen lässt, vorzugsweise als Handgepäck im Flugzeug oder Platz sparend im Auto mitgenommen werden kann und dennoch für das Kind individuell einstellbar ist und sich zudem durch einfache Herstellung und Handhabung auszeichnet.

Diese Aufgabe wird mit einem Kinderwagen mit einer aus Drehgelenken bestehenden Klappmechanik gemäss dem unabhängigen Patentanspruch gelöst.

Der Kinderwagen besteht aus einem Sitzelement, einer Rückenlehne, einer ersten Halterung für mindestens ein Vorderrad und einer zweiten Halterung für mindestens zwei Hinterräder und einer Schiebevorrichtung. Weiter weist er eine Klappmechanik auf, an der das Sitzelement, die Rückenlehne sowie die erste und die zweite Halterung jeweils einseitig befestigt sind. Alle Elemente sind so an der Klappmechanik befestigt, dass sie um diese geschwenkt werden können, wobei die Klappmechanik Drehgelenke zum stufenlosen Verschwenken der einzelnen Elemente aufweist.

Die Bezeichnungen Vorder- bzw. Hinterräder legen weder die Schieberichtung des Wagens noch die Blickrichtung des Kindes fest. Es ist z.B. denkbar, dass die Schiebevorrichtung derart schwenkbar ist, dass die Blickrichtung des Kindes in oder entgegen der Bewegungsrichtung des Wagens gewählt werden kann. Hier werden jene Räder als Vorderräder bezeichnet, welche sich bei den Füssen des Kindes befinden.

Zur Herstellung des Kinderwagens können verschiedene Materialien in verschiedenen Kombinationen verwendet werden. Insbesondere verstärkte Kunststoffe, z.B. mit stabilisierender Verrippung bzw. Gasinjektion oder mit Glasfaserfüllung, gezogene oder geschweisste Aluminium- oder Stahlprofile und Schaumstoffkissen mit Stoff- oder Kunstfaserüberzügen eignen sich zur Herstellung eines kinderfreundlichen Produkts.

Die Rückenlehne kann als Schale aus Kunststoff mit einem Stoffüberzug ausgebildet sein. Vorteilhaft ist jedoch eine Rückenlehne, bei der nur der Rahmen aus starrem Material geformt ist. Der Stoffbezug kann an diesem Rahmen befestigt werden und bildet die eigentliche Lehne. Dadurch kann der Wagen flacher zusammengeklappt werden. Ausserdem kann der Stoffüberzug mit Hilfe von Reiss- oder Klettverschlüssen oder Druckknöpfen in der Tiefe verstellbar gefertigt sein. Analog kann auch der Sitz als Stoffsitz in einem Rahmen aus Metall oder Kunststoff gefertigt sein.

Die Halterungen für die Vorder- und die Hinterräder können ebenfalls nur als Rahmen oder als starre Schale ausgebildet sein.

Vorzugsweise hat der Kinderwagen genau zwei Vorder- und zwei Hinterräder. Vorteilhaft ist des weiteren, wenn zumindest die Vorderräder frei drehbar befestigt sind, was das Lenken des Wagens vereinfacht.

Die Klappvorrichtung weist zwei grundsätzliche Positionen auf. In der ersten Position befindet sich der Kinderwagen in einer Betriebsstellung, in der zweiten Position ist er zusammengeklappt.

Der Kinderwagen ist vorteilhaft mindestens in der ersten Position des Kinderwagens fixierbar. Dem Fachmann sind viele Mittel zur Fixierung bekannt, wie der Kinderwagen in der Betriebsstellung fixiert werden kann. Beispielsweise können Anschläge, Klemmen, Rastnasen oder Keile die Elemente in ihrer Position halten. Weitere Mittel zum Fixieren des Wagens in der Betriebsposition sind durch die vorliegende Erfindung aber ebenfalls umfasst.

Damit die einfache Handhabung gewährleistet ist, ist vorzugsweise ein Auslösemechanismus vorgesehen, mittels welchem mindestens zwei von den Elementen Sitz, Rückenlehne, erste und zweite Halterung oder Schiebevorrichtung gemeinsam oder gleichzeitig aus der Betriebsstellung gelöst werden. Besonders vorteilhaft werden alle Elemente gemeinsam bzw. gleichzeitig gelöst. In diesem Fall lassen sich alle Elemente aus der Betriebsstellung mit einem Handgriff lösen und somit einfach in die zusammengeklappte Position bringen.

Um die Sicherheit zu erhöhen ist es vorteilhaft, wenn der Auslösemechanismus mit beiden Händen betätigt werden muss. Die Gefahr dass der Auslösemechanismus unabsichtlich, z.B. durch ein weiteres Kind, betätigt wird, kann weiter reduziert werden, wenn ein gewisser Kraftaufwand zum Betätigen des Auslösemechanismus notwendig ist. Dazu kann der Auslösemechanismus z.B. mit einer Feder stabilisiert werden.

Besonders bevorzugt umfasst der Auslösemechanismus einen Bowden-Zug. Dadurch kann der Auslöser, z.B. ein Hebel, an einer für eine erwachsene Person gut zugänglichen Stelle des Wagens angebracht werden, beispielsweise am oberen Ende der Rückenlehne. Über den Bowden-Zug wird die zum Lösen aufgewendete Kraft zu den Mitteln zur Fixierung des Wagens geleitet, welche üblicherweise am Gelenk selber angeordnet sind.

In der zusammengeklappten Position sind das Sitzelement, die Rückenlehne sowie die erste und zweite Halterung vorzugsweise etwa parallel zueinander von der Klappvorrichtung abstehend angeordnet. Somit ist der Kinderwagen in der zusammengeklappten Position nur etwa halb so lang wie in der Betriebsposition. Durch die höchstmöglich parallele Anordnung der einzelnen Elemente ist der Kinderwagen in der zusammengeklappten Position ausserdem sehr kompakt, im Vergleich zu herkömmlichen Kinderwagen relativ flach und deshalb platzsparend verstaubar.

In der Betriebsstellung sind die Elemente ungefähr sternförmig um die Klappvorrichtung herum angeordnet. Vorzugsweise lassen sich die Winkel zwischen den einzelnen Elementen frei einstellen und die Sitz- und Lehnenneigung individuell anpassen. Es ist aber auch denkbar, dass jedes der Elemente einzeln zwischen einer vorgegebenen Anzahl von Positionen verstellen lässt und die Winkel dadurch stufenweise variierbar sind.

In einer bevorzugten Ausführungsform sind die Drehgelenke des Sitzelements, der Rückenlehne sowie der ersten und zweiten Halterung auf einer Drehachse fluchtend angeordnet. Diese Drehachse ist nicht zwingend durchgehend auszubilden, sie kann auch als geometrisches Produkt mehrerer Achsen von einzelnen Drehgelenken bestehen.

Damit die Elemente des Wagens in der zusammengeklappten Position etwa parallel zueinander angeordnet sind, können die Elemente unterschiedlich gross sein. Beispielsweise kann die Halterung für die Vorderräder aus zwei Streben bestehen, zwischen welchen der Sitz in der zusammengeklappten Position angeordnet ist. Alternativ oder zusätzlich können einzelne der Elemente, z.B. die Rückenlehne, so am Klappmechanismus befestigt sein, dass der Drehpunkt nicht auf der Verlängerung der Lehne liegt, sondern leicht verschoben ist. Dies kann beispielsweise durch eine gekröpfte Befestigung der Elemente am Drehgelenk erreicht werden.

In einer bevorzugten Ausführungsform weisen die Drehgelenke der einzelnen Elemente Scheiben, Scheibenabschnitte oder drehbare Hebel auf, die an einer gemeinsamen Achse drehbar gelagert sind. Mindestens zwei der Scheiben, Scheibenabschnitte oder Hebel werden vorteilhaft durch eine gemeinsame Arretierungsanordnung, vorzugsweise mit einem gemeinsamen Arretierungselement, z.B. einem Keil, arretiert, insbesondere indem der Keil in eine Rastnut der Scheiben eingeführt werden kann. Die Scheiben können alle den gleichen Durchmesser aufweisen. Es ist ebenso möglich, dass einzelne der Scheiben bzw. Scheibenabschnitte einen schmaleren Durchmesser haben, so dass diese beim Lösen des Arretierungselements zuerst gelöst werden. Alternativ kann die Rastnut in einer Scheibe weniger tief sein als in einer anderen und ein Keil entsprechend treppenförmig ausgeprägt sein, dass die Scheiben in einer vorgegebenen Reihenfolge gelöst werden.

Als alternatives Arretierungselement kann eine Klemmvorrichtung vorgesehen sein, welche die Scheiben, Scheibenabschnitte oder Hebel arretiert. Die Klemmvorrichtung kann beispielsweise analog zur Fahrradbremse hufeisenförmig um die Scheiben, Scheibenabschnitte oder Hebel herum angeordnet sein. Wenn die Elemente arretiert sind, liegt die Klemmvorrichtung zumindest teilweise an den Scheiben, Scheibenabschnitten oder Hebeln an. Dies kann z.B. begünstigt werden, indem die Scheiben, Scheibenabschnitte oder Hebel mit Vorsprüngen, z.B. Bolzen oder Stiften versehen sind, die in die Klemmvorrichtung greifen.

Zum Lösen der Arretierung wird die Klemmvorrichtung geöffnet. Bei einer hufeisenförmigen Klemmvorrichtung heisst das, dass Öffnung verbreitert wird. Dadurch wird der Durchmesser der Klemmvorrichtung grösser, und die Scheiben, Scheibenabschnitte oder Hebel verlieren den Kontakt zur Klemmvorrichtung.

Ein Vorteil einer Scheiben-Anordnung ist zusätzlich, dass einzelne der Elemente so an den Scheiben befestigt sein können, dass die Verlängerung des Elements nicht durch den Drehpunkt der Scheibe läuft. Das entspricht einer tangentialen Befestigung des Elements an der entsprechenden Scheibe. Tangential ist hier nur auf die Richtung bezogen, legt aber nicht den Ort fest, an welchem das jeweilige Element an der entsprechenden Scheibe befestigt ist.

Die tangentiale Befestigung ist eine bevorzugte Alternative oder Ergänzung zur gekröpften Befestigung von Elementen am Drehgelenk und erlaubt eine verbesserte parallele Ausrichtung der Elemente in der zusammengeklappten Position des Wagens. Ausserdem ist ein Gelenk, das aus relativ grossen Scheiben besteht, stabiler als ein herkömmliches Drehgelenk.

In einer anderen bevorzugten Ausführungsform sind die Drehgelenke der verschiedenen Elemente auf zwei Drehachsen fluchtend angeordnet. Diese Ausführungsform ist besonders vorteilhaft, weil die Elemente in der zusammengeklappten Position so beinahe perfekt parallel gegeneinander ausgerichtet werden können. Eine Ausführung, bei der die Elemente auf drei Drehachsen fluchten, ist ebenfalls denkbar.

Einzelne oder alle der Elemente können mit Anschlägen zur Begrenzung des Schwenkwinkels versehen werden. Dadurch verläuft die Schwenkbewegung in einem kontrollierten Bereich. Unerwünschtes Klappen von Elementen in eine unerwartete und unhandliche Richtung wird damit verhindert.

Besonders bevorzugt sind die Anschläge durch eine Verriegelungsscheibe gegeben. Dies ist dann sinnvoll, wenn die Elemente an Drehscheiben befestigt sind. Jede dieser Scheiben kann mit einem Stift versehen sein, der in einer Längsnut der Verriegelungsscheibe läuft. Die Längsnut verläuft parallel zum Umfang der Scheibe über einen Winkelabschnitt der Scheibe. Damit die Stabilität der Verriegelungsscheibe gewährt ist, erstreckt sich die Längsnut in radialer Richtung vorteilhaft nicht weiter als über die Hälfte des Radius.

Über die Länge der Längsnut ist der Schwenkwinkel des Elements beschränkt. Falls mehrere Elemente an der Verriegelungsscheibe anschlagen sollen, können die näher bei der Verriegelungsscheibe liegenden Drehscheiben eine Längsnut aufweisen, durch welche der Stift der äusseren Scheibe zur Verriegelungsscheibe geführt wird. Dadurch wird der Schwenkwinkel der äusseren Scheibe auch durch die innere Scheibe beeinflusst. Die Scheiben können alle in der gleichen Längsnut der Verriegelungsscheibe geführt werden. Es ist aber auch denkbar, dass die Verriegelungsscheibe mehrere Längsnut-Abschnitte aufweist, wobei jeder Abschnitt einen Stift führt. Vorteilhaft an diesen Anordnungen ist, dass der Durchmesser aller Scheiben gleich gross gewählt werden kann.

Alternativ kann die äussere Scheibe zumindest stellenweise einen grösseren Durchmesser haben als die innere Scheibe. Der Stift der äusseren Scheibe kann dann an der inneren Scheibe vorbei und in einer radial weiter aussen liegenden Längsnut der Verriegelungsscheibe geführt werden.

Eine weitere, besonders bevorzugte Ausführungsform von Mitteln zum Beschränken der Schwenkbewegung einzelner Elemente ist das Verkeilen der Elemente gegen einander. Dies kann beispielsweise geschehen, wenn der Stift einer Scheibe in einer Längsnut einer benachbarten Scheibe geführt wird. Beispielsweise kann die Scheibe, an welcher die Halterung für die Hinterräder befestigt ist, eine Längsnut aufweisen. In dieser Längsnut kann ein Stift geführt werden, welcher an der Scheibe für die Halterung der Vorderräder befestigt ist. Dadurch lässt sich die Relativbewegung zwischen der ersten und der zweiten Halterung einschränken. Das bedeutet, dass die beiden Elemente nur ein einem vorgegebenen Winkelbereich gegeneinander geschwenkt werden können.

Selbstverständlich kann das gleiche Prinzip auch auf andere Elemente angewandt werden.

Besonders einfach lässt sich die Schwenkbewegung von einzelnen Elementen auch einschränken, indem diese mit flexiblen Mitteln verbunden werden. Diese flexiblen Mittel können Bänder oder Schnüre sein, oder auch Stäbe mit wenigstens einem Gelenk. Diese Art der Einschränkung der Bewegung ist insbesondere für die beiden Halterungen der Vorder- und Hinterräder sinnvoll, weil beispielsweise in die Verbindung der beiden Halterungen ein Tragnetz gelegt werden könnte.

Vorteilhaft weist der Kinderwagen weiter Mittel zum Fixieren des Wagens in der zusammengeklappten Position auf. Diese Mittel können Rastnasen, Klemmen, Gurte oder andere dem Fachmann bekannte Elemente aufweisen. Durch das Fixieren des Kinderwagens in der zusammengeklappten Position kann dieser einfach und sicher transportiert werden. Dies ist insbesondere dann wichtig, wenn der Wagen von Hand getragen werden soll.

In einem bevorzugten Ausführungsbeispiel sind an der Rückenlehne des Kinderwagens Vorsprünge angebracht. Diese Vorsprünge stützen den Kinderwagen in der zusammengeklappten Position, so dass ein aufrechter Stand des Wagens möglich ist. Die parallel angeordneten Elemente des Wagens stehen dann senkrecht vom Boden ab. Die Vorsprünge können ausserdem auch in der Betriebsstellung des Wagens vorteilhaft genutzt werden, z.B. können daran Schirme, Einkaufstaschen, Jacken etc. aufgehängt werden. Es ist auch möglich, dass Zukaufartikel für den Kinderwagen daran befestigbar sind, z.B. ein Sonnenschirm oder eine Halterung für eine Trinkflasche.

Bevorzugter Weise ist eine Fussstütze an der ersten Halterung angebracht. Dies erhöht den Komfort und die Sicherheit für das Kind.

Die Schiebevorrichtung kann an der Rückenlehne befestigt sein. Ebenso ist es denkbar, dass sie direkt an der Klappvorrichtung befestigt ist und ebenfalls um diese geschwenkt werden kann. Vorteilhaft ist es, wenn die Schiebevorrichtung in ihrer Länge verändert werden kann, z.B. indem sie an Schienen oder an teleskopartig ineinander greifenden Rohren befestigt ist. Alternativ kann die Vorrichtung auch um bis zu 180° schwenkbar an der Rückenlehne angebracht sein. Das Schwenken und/oder die Längenregulierung erleichtern verschieden grossen Personen, den Wagen bequem zu schieben.

Eine um 180° schwenkbare Schiebevorrichtung kann ausserdem mit dem Auslösemechanismus zum Lösen des Wagens aus der ersten Position verbunden sein. Bei einer besonders vorteilhaften Ausführung wird das Lösen der Mittel zur Fixierung des Wagens erst durch das Umschwenken der Schiebevorrichtung ausgelöst. Dies kann beispielsweise geschehen, indem ein Bowden-Zug über eine Welle mit der Schiebevorrichtung verbunden ist. Durch die Bewegung der Schiebevorrichtung wird der Bowden-Zug angespannt und löst die Fixierung des Wagens. Die Schiebevorrichtung wird in diesem Ausführungsbeispiel vorteilhaft durch weitere Mittel zur Fixierung während dem Betrieb in Position gehalten.

In einer möglichen Ausführungsform sind die Elemente in der zusammengeklappten Position so angeordnet, dass die Unterseite des Sitzelementes und die Halterung der Vorderräder die Aussenseiten des Wagens bilden. Vorteilhaft ist daran, dass die Sitzfläche und die Innenseite der Rückenlehne Umwelteinflüssen nicht so stark ausgesetzt sind und eher sauber bleiben. Besonders vorteilhaft ist es dazu, wenn das Sitzelement eine ausklappbare oder ausfahrbare Verlängerung besitzt, so dass die Länge der Sitzfläche im ausgeklappten oder ausgefahrenen Zustand der Länge der Rückenlehne entspricht. Damit sind beide Flächen über ihre ganze Ausdehnung hinweg geschützt.

Alternativ können auch die Oberseite des Sitzes und die Innenseite der Rückenlehne in der zusammengeklappten Position des Wagens die Aussenseiten bilden. Nachteilig ist hierbei, dass die Sitzfläche des Kindes leichter beschmutzt wird. Vorteilig an dieser Anordnung ist jedoch, dass das Zusammenklappen des Kinderwagens besonders einfach geschieht. Nach dem Lösen der Fixierung klappen der Sitz und die Rückenlehne auf die Halterungen der Vorder- und Hinterräder, während diese vorzugsweise noch in der Betriebsstellung stehen. Somit ist der Wagen bereits zur Hälfte zusammengeklappt, bis er das erste mal angehoben werden muss.

Um die Sitzfläche und die Rückenlehne vor Verunreinigungen zu schützen, können Schutzhüllen für den Wagen angeboten werden.

Besonders vorteilhaft lässt sich der Kinderwagen in Betriebsstellung zwischen einer Liegeposition und einer Sitzposition einstellen. Die Sitzposition entspricht der oben erwähnten ungefähr sternförmigen Anordnung der einzelnen Elemente. In der Liegeposition kann die Rückenlehne bis in eine ca. waagrechte Position gebracht. Die Verlängerung des Sitzes wird ausgeschwenkt oder ausgezogen und dient als zusätzliche Fussstütze für das liegende Kind. Insbesondere kann diese Verlängerung mit einem fixen oder ausklappbaren Anschlag versehen sein, der die Füsse des Kindes nach unten stabilisiert.

Vorzugsweise ist an mindestens einem der Elemente seitlich zumindest ein Traggriff angebracht, was den Transport des zusammengeklappten Wagens weiter vereinfacht.

Alternativ kann ein Traggriff auch in der Querrichtung des Wagens vorgesehen sein. Bei der Ausführungsform, bei welcher die Sitzfläche und die Innenseite der Rücklehne die Aussenseiten des zusammengeklappten Wagens bilden, kann z.B. ein Traggriff zwischen dem Sitz und der Rückenlehne vorgesehen sein, der beim Zusammenklappen des Wagens zum Vorschein kommt. Dieser Traggriff befindet sich dann ungefähr auf der Drehachse des Klappmechanismus. In der Betriebsstellung ist solch ein Traggriff unter dem Sitz verborgen. Dies ist ästhetisch vorteilhaft. Beim Zusammenklappen erleichtert ein solcher Traggriff das endgültige Zusammenklappen des Wagen. Wenn der Sitz und die Rückenlehne auf die beiden Halterungen der Vorder- und Rückräder zu liegen gekommen sind, liegt der Traggriff dazwischen frei. Der Wagen kann dann am Traggriff angehoben werden, wobei sich die Halterungen zusammenbewegen, bis sie aneinander liegen. Der Wagen befindet sich dann in der zusammengeklappten Position.

Besonders flach lässt sich der Wagen zusammenlegen, wenn die Vorder- und/oder Hinterräder des Wagens um ca. 90° gegen den Wagen schwenkbar angebracht sind. Dies ist insbesondere dann von Vorteil, wenn die Räder einen grossen Durchmesser haben.

Es ist aber auch denkbar, dass die Räder seitlich leicht über die Halterungen hinaus stehen. Besonders vorteilhaft ist dabei, wenn die beiden Halterungen von ihrer Drehachse zur Aufhängung der Räder nicht gleich lang sind, beispielsweise jene für die Hinterräder etwas kürzer ist als jene für die Vorderräder. Die Halterungen lassen sich dann aneinander legen. Da die Räder über die Halterungen hinaus stehen, hindern sie die Bewegung nicht.

Wenn der Längenunterschied der beiden Halterungen grösser ist als der Radius der Räder, finden sie in Längsrichtung der Halterungen nebeneinander Platz, die Halterungen werden nicht durch die Räder sondern durch andere Elemente gestoppt.

Die Vorder- und/oder Hinterräder können so angeordnet sein, dass sie in der zusammengeklappten Position über die restlichen Elemente hinausragen. Beim Transport des Wagens können sie so zum Ziehen oder Stossen des Wagens verwenden werden.

Zum Schutz des Kinderwagens in der zusammengeklappten Position gegen Staub, Schmutz, Feuchtigkeit oder Beschädigung können Schutzüberzüge mitgeliefert werden. Diese sollten sinnvoller Weise mindestens die Ecken überdecken, da diese am stärksten gegen Stösse ausgesetzt sind. Die Schutzüberzüge können auch den ganzen Wagen umschliessen, was sich dann eignet, wenn er längere Zeit gelagert werden sollte. Für den Transport sind Schutzüberzüge vorteilhafter, die zumindest einen Traggriff freilassen. Für schwerere Wagen ist es vorteilhaft, dass die Vorder- und/oder Hinterräder sowie die Schiebevorrichtung vom Schutzüberzug ausgenommen sind, so dass der Wagen als Trolleykoffer gezogen oder gestossen werden kann.

Im folgenden wird die Erfindung anhand von Abbildungen und verschiedenen Ausführungsbeispielen genauer erläutert. Die Abbildungen zeigen hierbei:
- Fig. 1a:: einen erfindungsgemässen Kinderwagen in der Betriebsstellung,
- Fig. 1b:: eine alternative Ausführungsform eines erfindungsgemässen Kinderwagens in Betriebsstellung,
- Fig. 2a, 2b:: einen Kinderwagen gemäss Fig. 1a in der zusammengeklappten Position in zwei Ansichten,
- Fig. 2c:: einen Kinderwagen gemäss Fig. 1b in der zusammengeklappten Position,
- Fig. 3:: einen zusammengeklappten Kinderwagen mit Schutzüberzügen an den Ecken,
- Fig. 4:: einen zusammengeklappten Kinderwagen gemäss Fig. 1a mit einem Schutzüberzug, als Trolley-Koffer ziehbar
- Fig. 5a-5d:: eine schematische Darstellung des Umklappens des Kinderwagens gemäss Fig. 1a aus der Betriebsposition in die zusammengeklappte Position,
- Fig. 6:: eine Teilansicht der Klappvorrichtung eines Kinderwagens gemäss Fig. 1a,
- Fig. 7a,: 7b: eine weitere Ausführungsform eines erfindungsgemässen Kinderwagens in Betriebsstellung in zwei Ansichten,
- Fig. 7c:: den Kinderwagen gemäss Fig. 7a und 7b in Seitenansicht,
- Fig. 8a, 8b:: den Kinderwagens gemäss Fig. 7a-7c in zusammengeklappter Position in zwei Ansichten,
- Fig. 8c:: den Kinderwagen gemäss Fig. 8a und 8b in Seitenansicht,
- Fig. 9a-9d:: eine schematische Darstellung des Umklappens des Kinderwagens gemäss Fig. 7a-7c, 8a-8c in die zusammengeklappte Position,
- Fig. 10:: ein vergrösserter Ausschnitt des Klappgelenkes des Kinderwagens gemäss Fig. 7a-7c,
- Fig. 11a:: eine schematische Darstellung der Klappvorrichtung eines Kinderwagens gemäss Fig. 7a-7c,8a-8c in perspektivischer Darstellung,
- Fig. 11b:: der Schnitt durch die Achse A gemäss Fig. 11a,
- Fig. 12a-12d:: Elemente des Klappgelenks in Aufsicht,
- Fig. 13:: eine perspektivische Darstellung des Auslösemechanismus eines Kinderwagens gemäss Fig. 7a-7c, 8a-8c,
- Fig. 14a,: 14b: perspektivische Darstellung der Fixierung der Klappvorrichtung in zwei Ansichten, und
- Fig. 15a-15i:: detaillierte perspektivische Darstellung der Elemente des Klappgelenks gemäss Fig. 7a-7c.

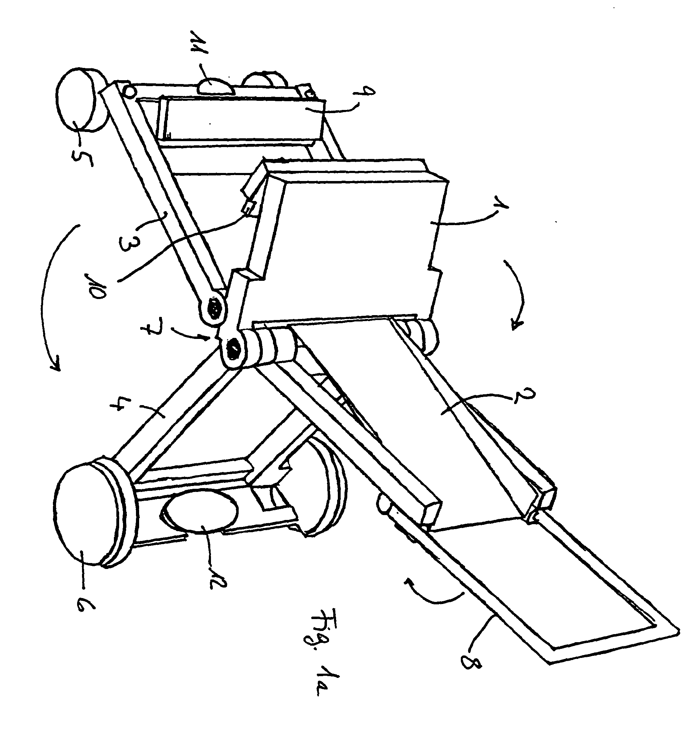

In Fig. 1a ist der zusammenklappbare Kinderwagen in Betriebsstellung dargestellt. Das Sitzelement 1, die Rückenlehne 2, die erste Halterung 3 für die Vorderräder 5 und die zweite Halterung 4 für die Hinterräder 6 sind ungefähr sternförmig um die Klappvorrichtung 7 angeordnet. Die Schiebevorrichtung8 ist an der Rückenlehne 2 befestigt. An der ersten Halterung 3 ist eine Fussstütze 9 für die Sicherheit und den Komfort des Kindes angebracht. Zum Zusammenklappen kann diese Fussstütze eingeklappt werden. Am Sitzelement 1 ist eine ausklappbare Verlängerung 10 angebracht, die in der zusammengeklappten Position des Kinderwagens aufgeklappt wird. Wird der Kinderwagen in eine Liegeposition gebracht, dient die Verlängerung als Fussstütze für das Kind. An der ersten Halterung 3 ist ein Verschluss 11 angebracht, der in den Wagen in der zusammengeklappten Position fixiert. An der zweiten Halterung 4 ist ausserdem eine Bremse 12 befestigt, mit welcher die Hinterräder des Wagens blockiert werden. Alternativ kann die Bremse 12 über Seilzüge mit Griffen (nicht dargestellt) an der Schiebevorrichtung 8 befestigt sein und mit den Händen bedient werden.
Mit den Pfeilen sind die Bewegungen der einzelnen Elemente beim Verstellen angedeutet.

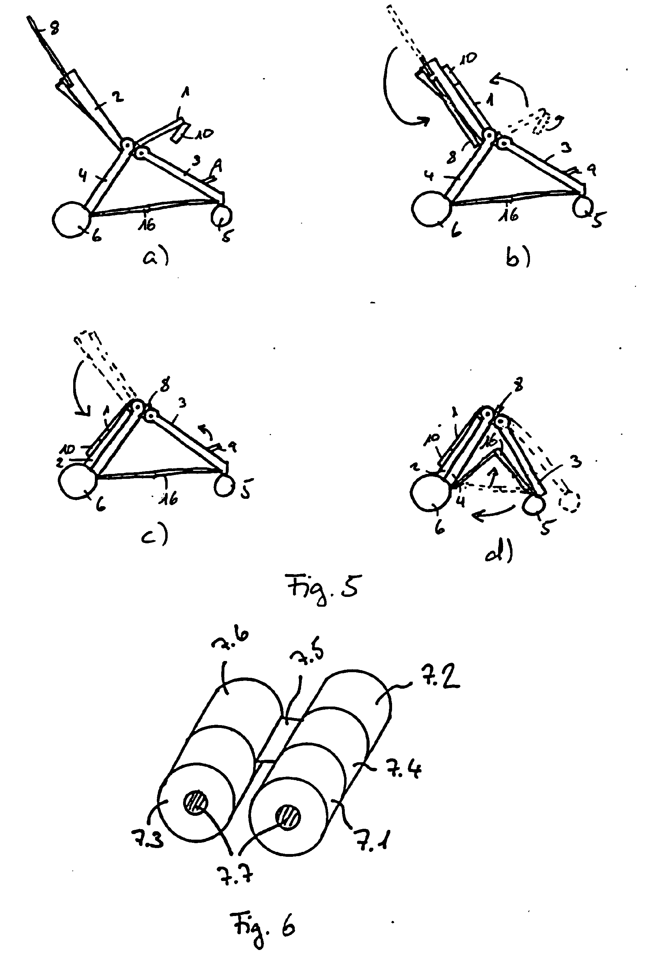

Die Räder 5, 6 oder die Halterungen 3, 4 des Wagens können über Federn (nicht dargestellt) gelagert sein, die beim Fahren wegen Unebenheiten im Weg vorkommende Stösse auffangen. Ausserdem können die beiden Halterungen 3 und 4 mit Querverbindungen 16 (in Fig. 5 ersichtlich) verbunden sein, was den Wagen stabilisiert und gegen unerwünschtes Zusammenklappen schützt. Dies ist insbesondere auf unebenen Wegen oder beim überqueren von Strassen mit Randsteinen von Vorteil. An diesen Querverbindungen 16 kann ein Transportnetz (nicht dargestellt) befestigt werden.

An der Rückenlehne 3 oder an der Schiebevorrichtung 8 kann ein Sonnen- und/oder Regenschirm (nicht dargestellt) befestigt sein, der vorzugsweise fächerartig aufgeklappt werden kann. Zudem kann aus Sicherheitsgründen ein Gurtsystem (nicht dargestellt) an der Rückenlehne 2 und am Sitzelement 1 befestigt sein, mit dem das Kind während dem Fahren im Wagen gesichert wird.

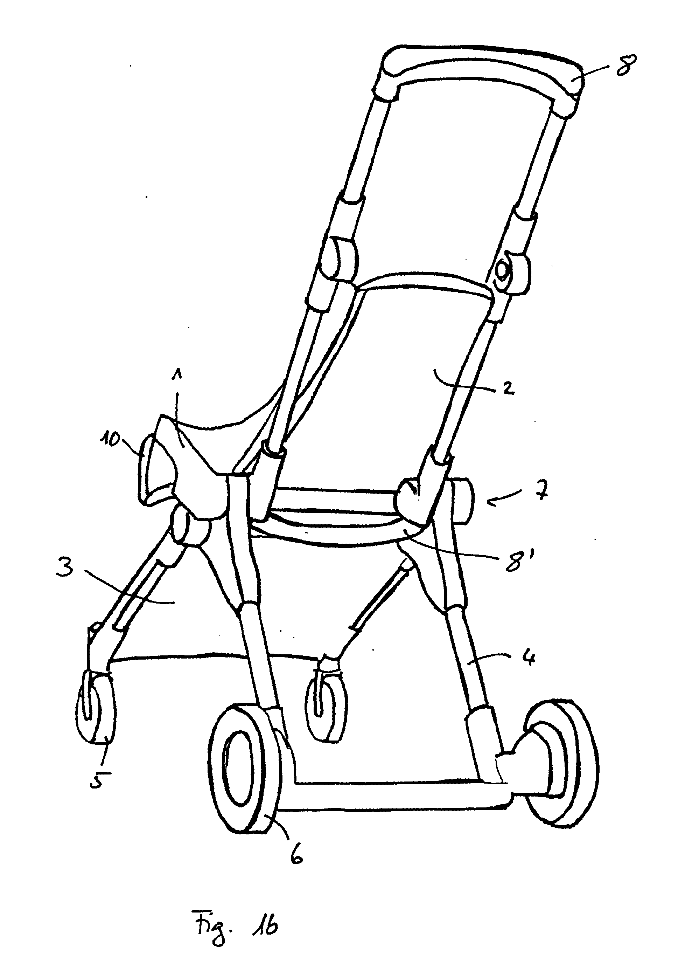

In den Fig. 2a und 2b sind zwei Ansichten des Kinderwagens gemäss Abb. 1a in der zusammengeklappten Position dargestellt. In dieser Ausführung bilden das Sitzelement 1 und die erste Halterung 3 die Aussenseiten des Kinderwagens. Die Halterung 3 ist dazu als verstärkte Schale ausgebildet, so dass der Kinderwagen im zusammengeklappten Zustand stabile Aussenseiten hat. Die Hinterräder 6 befinden sich in Radkappen (nicht dargestellt), die um 90° gegen den Wagen geklappt werden. Die Fussstütze 9 ist drehbar gelagert und wird im zusammengeklappten Zustand gegen den Wagen gedreht. Dadurch ist der gesamte Wagen sehr kompakt und stabil. Der Verschluss 11 verhindert, dass der Wagen sich unerwünschter Weise öffnet. In dieser Ausführungsform ist die Schiebevorrichtung 8 derart drehbar an der Rückenlehne 2 befestigt, dass sie beim Zusammenklappen um 180° gegen die Lehne gedreht wird und sich zum Tragen des Wagens eignet. Die Vorderräder 5 stehen in der zusammengeklappten Position über die übrigen Elemente heraus. Der Wagen kann also auch in der zusammengeklappten Position geschoben oder gezogen werden. Dies ist besonders dann einfach realisierbar, wenn die Schiebevorrichtung 8 in ihrer Länge verstellbar ist. Dies ist mit gepunkteten Linien angedeutet.

Wie in Fig. 1b dargestellt, kann die Schiebevorrichtung 8 zusätzlich mit einem Gegenstück 8' am unteren Ende ausgestattet sein. Im zusammengeklappten Zustand kann dieses Gegenstück 8' zum Tragen oder auch zum Schieben bzw. Ziehen des Wagens dienen.

Das Gegenstück 8' kann analog zur Schiebevorrichtung 8 teleskopartig ausziehbar gestaltet sein, was beim Schieben oder Ziehen des Wagens im zusammengeklappten Zustand vorteilhaft ist (siehe Fig. 2c).

Bei der Ausführungsform gemäss Fig. 1b übernimmt das Gegenstück 8` im zusammengeklappten Zustand die Funktion der Schiebevorrichtung 8, was in Fig. 2c dargestellt ist. Das teleskopartige Ausziehen des Gegenstücks 8` zum Schieben oder Ziehen des Wagens ist mit gepunkteten Linien angedeutet. Die Schiebevorrichtung 8 kann eingeklappt oder eingefahren werden und ist in Fig. 2c nicht sichtbar. Analog zur Ausführungsform gemäss Fig. 1a bilden auch bei diesem Kinderwagen das Sitzelement 1 und die Halterung 3 die Aussenseiten des Kinderwagens im zusammengeklappten Zustand.

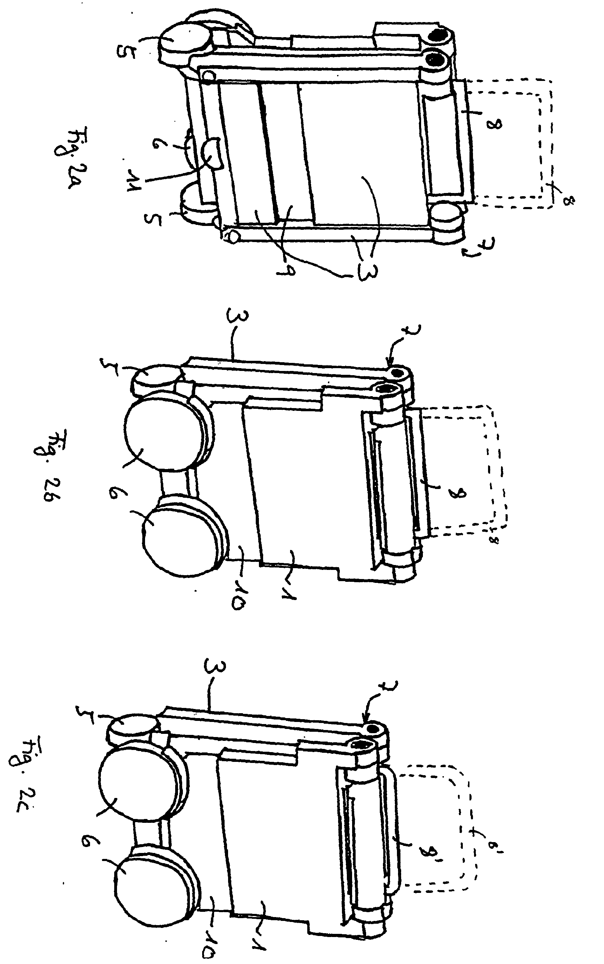

In Fig. 3 ist eine mögliche Ausführungsform für Schutzüberzüge 14 zu sehen. Die Schutzüberzüge 14 bestehen aus einem weichen, vorzugsweise wasserdichten Material wie Kunstfasern und können inwendig mit Schaumstoff gepolstert sein. Je zwei diagonal gegenüber liegende Schutzüberzüge 14 sind mit einem Gummizug 15 verbunden, was ein einfaches und stabiles Anbringen der Überzüge 14 ermöglicht. In dieser Ausführungsform des Kinderwagens ist ausserdem an der zweiten Halterung 4 ein Traggriff 3 befestigt, an welchem der Wagen im zusammengelappten Zustand einfach transportiert werden kann.

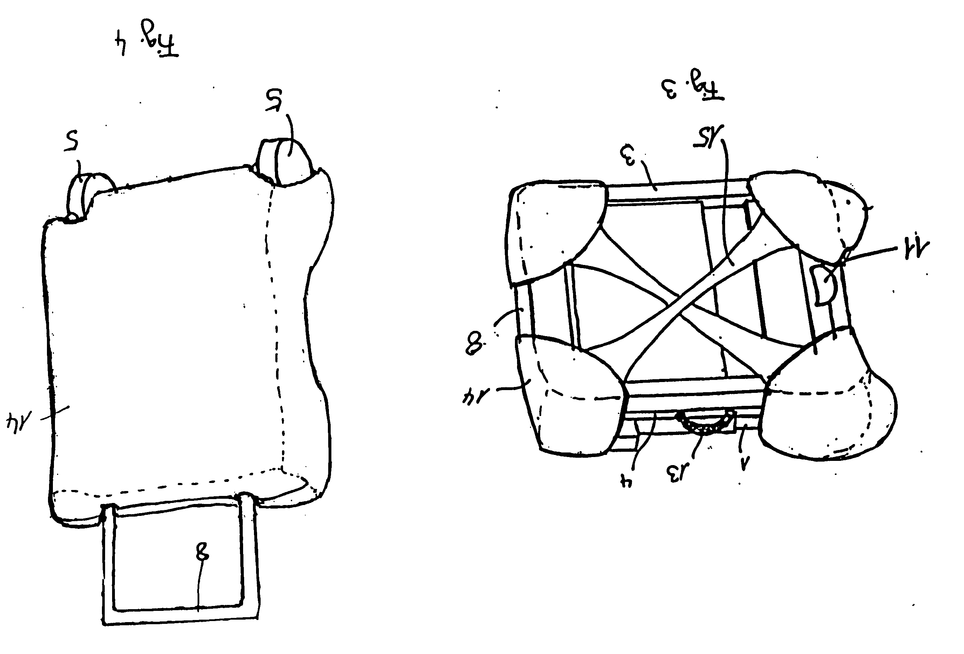

In Fig. 4 ist der Wagen im zusammengeklappten Zustand wie ein Trolley-Koffer schieb- oder ziehbar. Der Schutzüberzug 14 hat Öffnungen für die Vorderräder 5 und die Schiebevorrichtung 8. Zum Verpacken des Kinderwagens in den Schutzüberzug 14 kann dieser mit einem Reiss- oder Klettverschluss (nicht dargestellt) geöffnet werden. Dieser Schutzüberzug 14 ist vorzugsweise aus einem stabilen Stoff gefertigt.

Am Kinderwagen kann eine Falttasche (nicht dargestellt) befestigt sein, z.B. an der Halterung 3 für die Vorderräder. In dieser Falttasche kann der Schutzüberzug verstaut werden, alternativ können dort auch Spielsachen, Windeln oder andere Gegenstände mitgeführt werden.

Wie der Kinderwagen zusammengeklappt wird, ist aus Fig. 5 ersichtlich. In Teilabbildung a) befindet sich der Wagen in der Betriebsposition. In Teilabb. b) wurde die Verlängerung 10 des Sitzelements 1 hochgeklappt und das Sitzelement 1 gegen die Rückenlehne 2 geklappt. Die Schiebevorrichtung 8 wurde um 180° gegen die Rückenlehne 2 geschwenkt. In Teilabb. c) wurden Rückenlehne 2 und Sitzelement 1 gegen die Halterung 4 geklappt. Die Fussstütze 9 wird in die Halterung 3 eingeklappt. In Teilabbildung d) werden die beiden Halterungen 3 und 4 gegeneinander geklappt. Dazu muss die Querverstrebung 16 ebenfalls hochgeklappt werden.

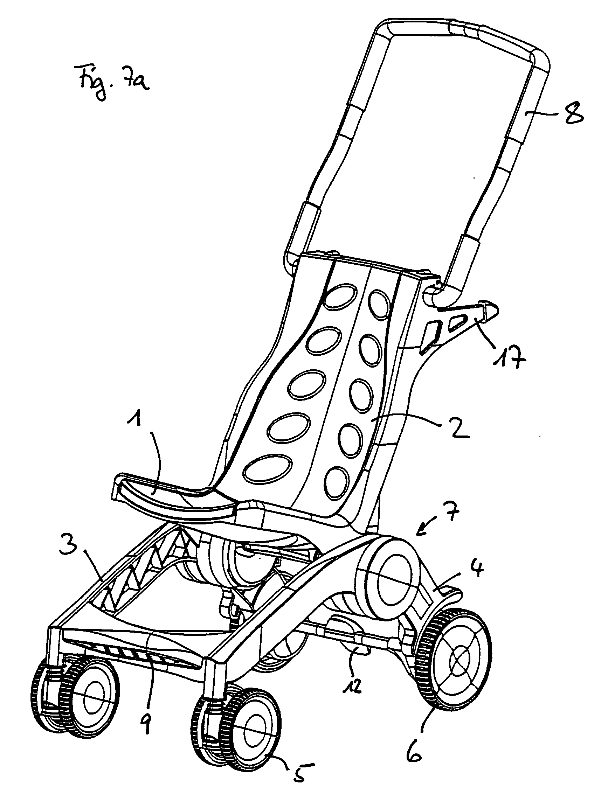

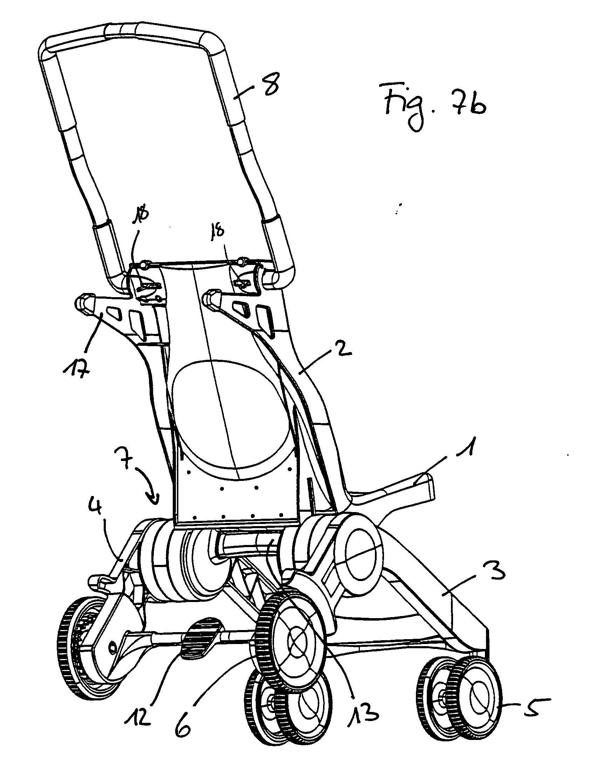

Fig. 6 ist eine schematische Darstellung eines Teils der Klappvorrichtung 7. Am Wagen sind zwei derartige, gegeneinander gespiegelte Anordnungen an der gleichen geometrischen Achse angeordnet.

An den beiden parallelen Walzen 7.7 sind die Wagenelemente befestigt. Die Sitzfläche 1 ist mit der Walze 7.1, die Rückenlehne 2 mit der Walze 7.2 und die erste Halterung 3 mit der Walze 7.3 verbunden. Die zweite Halterung 4 ist mit der Walze 7.4 verbunden, die ihrerseits über die Brücke 7.5 mit der Walze 7.6 verbunden ist. Über die Brücke 7.5 werden die beiden zentralen Walzen 7.7 also gegeneinander in Position gehalten.

Die Arretierung der einzelnen Walzen kann unterschiedlich ausgeprägt sein. In einer bevorzugten Ausführungsform sind die beiden Walzen 7.4 und 7.6 an den Walzen 7.7 fixiert. Die übrigen Walzen sind drehbar an den Walzen 7.7 gelagert und können mit Hilfe von Bremsen fixiert werden. Bevorzugt sind Bremsen in Form von gegeneinander drehbaren Bremsbacken innerhalb der drehenden Walzen. Diese können über eine Feder arretiert werden, die über Druckknöpfe in den Naben der Walzen 7.7 gespannt werden.

Als Bremsen können auch verschiedene Formen von Trommelbremsen eingesetzt werden. Insbesondere ist es denkbar, dass die Walzen 7.7 zugleich die Bremsbacken der Trommelbremse sind und über eine kegelförmige Schraube an die Innenwand der festzustellenden Walze gedrückt werden. Da zum Drehen der Schrauben Kraft aufgewendet werden muss, ist zugleich gewährleistet, dass ein Kind die Bremsen nicht lösen kann.

Ebenso ist es denkbar, dass die Arretierung mit einer Stiftbremse geschieht, wobei Stifte durch Löcher in den Walzen 7.7 gegen die Innenwand der festzustellende Walze gedrückt werden. Dabei kann die Arretierwirkung verbessert werden, wenn die Innenwände der Walzen mit Einbuchtungen versehen sind, in welche die Stifte passen. Allerdings sind die einzelnen Elemente so nicht kontinuierlich gegeneinander verstellbar. Die Stifte können über eine Federmechanik mit einem Druckknopf verbunden sein, der in den Naben der Walzen 7.7 angebracht ist.

Anstelle von Bremsen in den Walzen, kann die Arretierung auch ausserhalb der Walzen stattfinden. Zum Beispiel ist es möglich, die Halterungen 3,4 mit Querstangen derart zu verbinden, dass die Querstangen an einer Halterung drehbar und an der anderen Halterung über ein Zahnprofil lösbar befestigt sind. Auf die gleiche Art können auch das Sitzelement 1 und die Rückenlehne 2 verbunden werden, wobei diese Querstangen dann zugleich als Armstützen dienen können. Auch diese Form der Arretierung lässt keine kontinuierliche Einstellung der Winkel zwischen den einzelnen Elementen zu. Je nach der Anzahl der Zähne im Profil können aber verschiedene Winkel eingestellt werden.

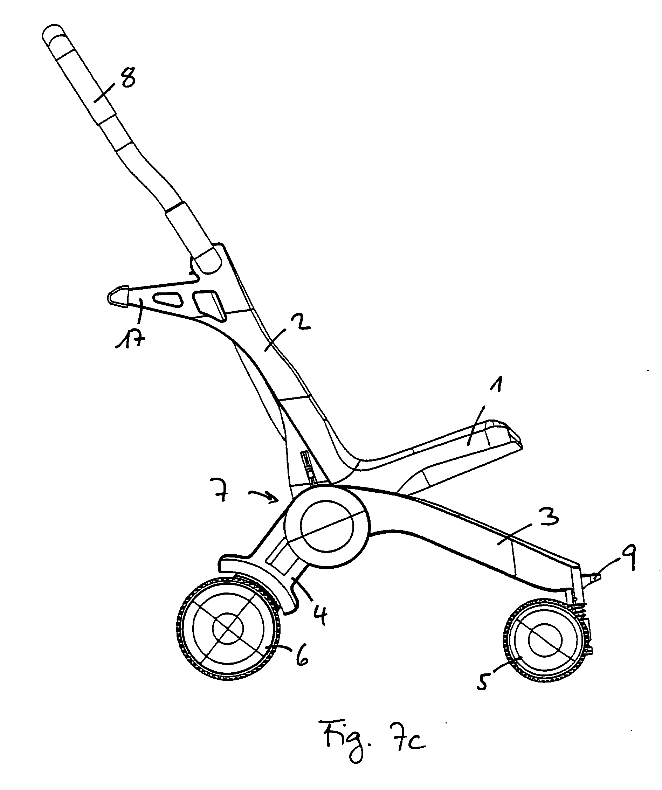

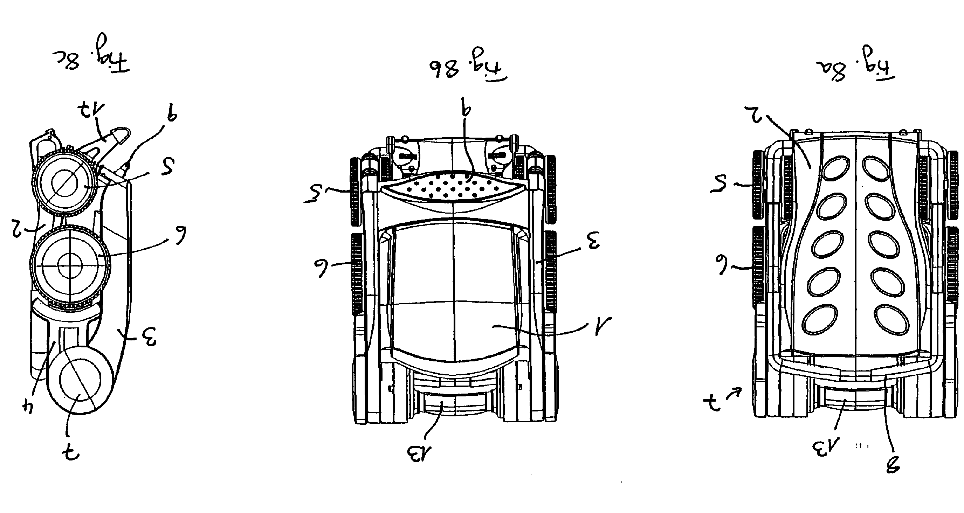

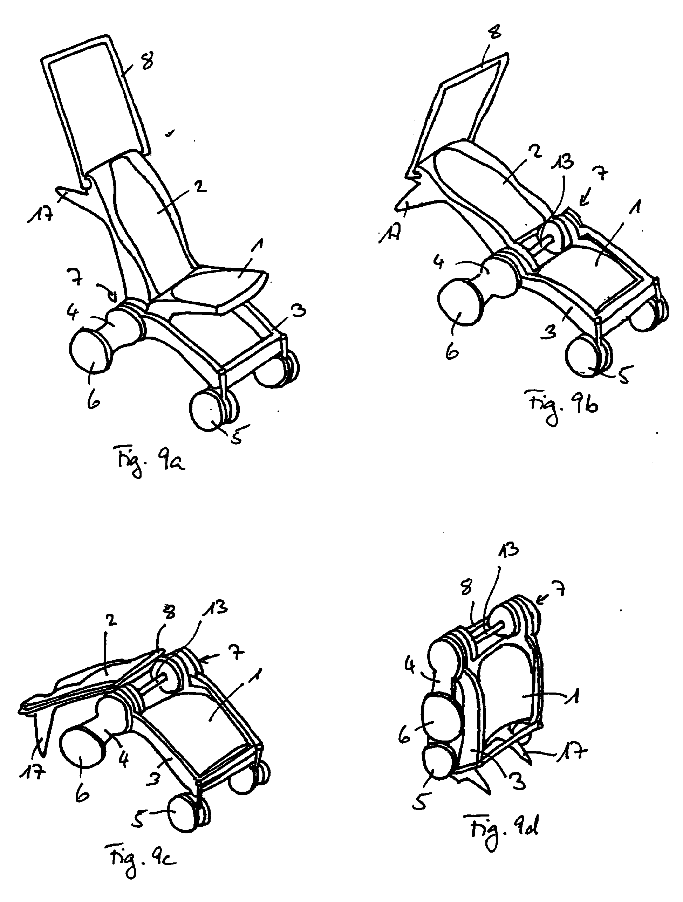

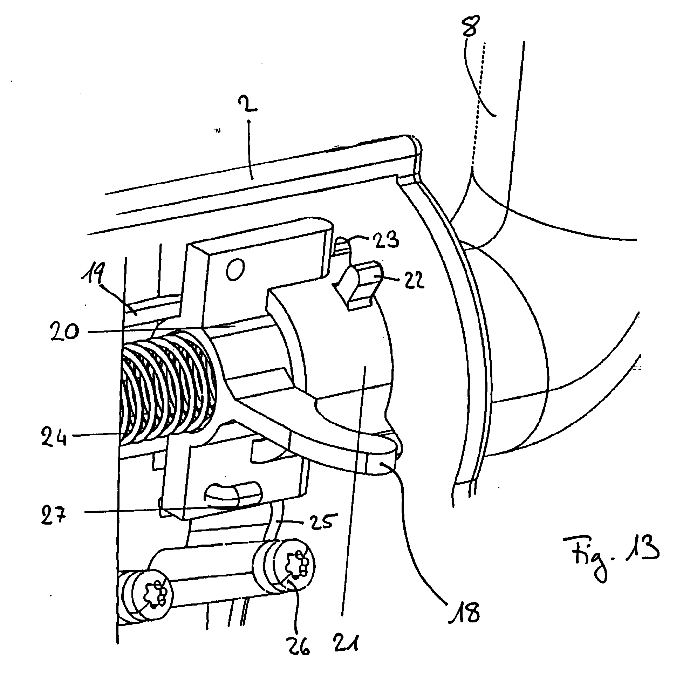

Eine alternative bevorzugte Ausführungsform der erfindungsgemässen Kinderwagens ist in den Fig. 7a-7c, 8a-8c dargestellt. Der Klappmechanismus 7 weist nur eine Drehachse A (Fig. 11a, 11b) auf. Die Drehachse A ist nicht durchgehend ausgebildet sondern ist das geometrische Produkt von zwei um diese Achse drehbaren Scheibenbündeln.

Der Sitz 1, die Rückenlehne 2, die erste Halterung 3 für die Vorderräder 5 und die zweite Halterung 4 für die Hinterräder 6 sind aus stabilem Kunststoff gefertigt. Das Gewicht dieses Kinderwagens ist dadurch gegenüber herkömmlichen Metallwagen deutlich reduziert und beträgt ca. 6 kg. Die Schiebevorrichtung 8 besteht ebenfalls aus Kunststoff, könnte aber auch aus Leichtmetall, z.B. Aluminium gefertigt werden.

Die Räder 5 und 6 sind herkömmliche Hartgummiräder mit Aluminiumfelgen. Die Hinterräder 6 sind in der Vorwärtsausrichtung fest gehalten, während die Vorderräder 5 um eine vertikale Achse drehbar sind. Um das Fahren auf unebenen Wegen zu erleichtern, und um das Zusammenklappen zu vereinfachen, können die Vorderräder 5 in der Vorwärtsausrichtung arretiert werden. Dazu ist je ein Hebel (nicht dargestellt) für jedes Rad vorgesehen, mit welchem ein Stift in die Radaufhängung geführt und dort arretiert wird.

Wie in Fig. 7a sichtbar, ist die Halterung 3 im Gegensatz zum Beispiel aus Fig. 1a nicht aus einer Kunststoffplatte gefertigt, sondern weist nur zwei Längsstreben auf. An der Halterung 3 ist ausserdem eine Fussstütze 9 angebracht. Der Sitz 1 ist so schmal, dass er zwischen den Längsstreben der Halterung 3 Platz findet.

An der Rückenlehne 2 sind nach hinten weisende Vorsprünge 17 angebracht. An diesen Vorsprüngen 17 können Zukaufteile wie Einkaufsnetze, Sonnen- oder Regenschirme, Getränkeflaschenhalter oder ähnliches befestigt werden. Sie eignen sich aber auch, um z.B. Jacken oder Einkaufstaschen daran aufzuhängen. Wie aus Fig. 8c ersichtlich, wird der Kinderwagen in der zusammengeklappten Position auf diesen Vorsprüngen aufgestützt.

In Fig. 7b ist der Kinderwagen schräg von hinten abgebildet. Unter dem Sitz 1 und der Rückenlehne 2 ist ein Traggriff 13 sichtbar. In der zusammengeklappten Position wird der Kinderwagen an diesem Griff 13 getragen.

Die Bremse 12 blockiert die Hinterräder 6. Dadurch wird ein unerwünschtes Wegrollen des Wagens verhindert.

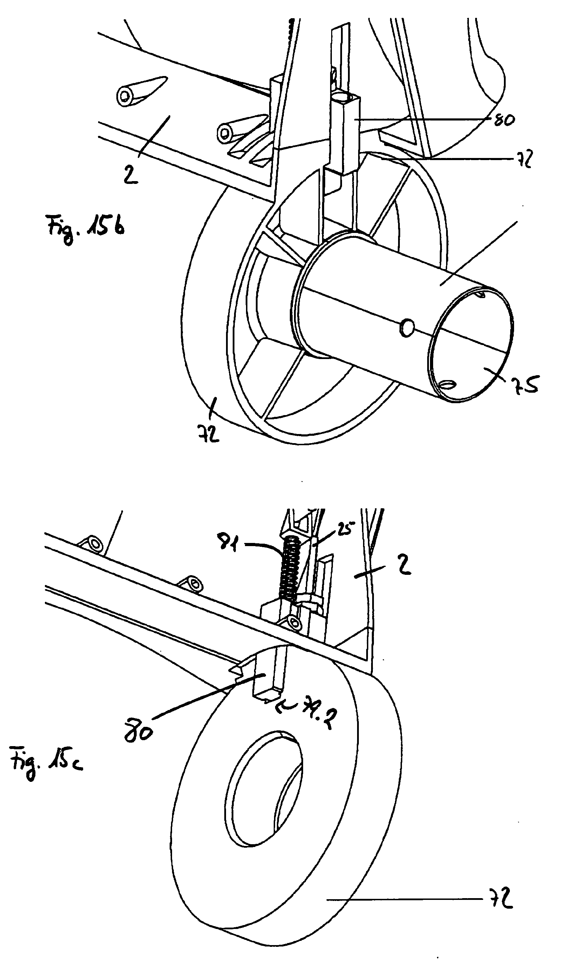

Ebenfalls in Fig. 7b sind Auslösehebel 18 zum Lösen der Fixierung des Wagens sichtbar. Diese Hebel 18 sind symmetrisch bezüglich der vertikalen Wagenmitte angeordnet und müssen gleichzeitig betätigt werden, damit die Fixierung des Wagens gelöst werden kann. Es genügt nicht, nur einen der Hebel 18 zu betätigen, um die Fixierung des Wagens zu lösen. Durch diese symmetrische Anordnung ist das Risiko reduziert, dass die Fixierung versehentlich gelöst wird. Der gesamte Auslösemechanismus ist im Zusammenhang mit Fig. 13 beschrieben.

Die Auslösehebel 18 lösen die Fixierung aller Elemente des Wagens.

Aus der Seitenansicht des Wagens in Fig. 7c kommt deutlich zum Vorschein, dass die Halterung 4 und der Sitz 1 kürzer sind als die Halterung 3. Diese ist in etwa gleich lang wie die Rückenlehne 2.

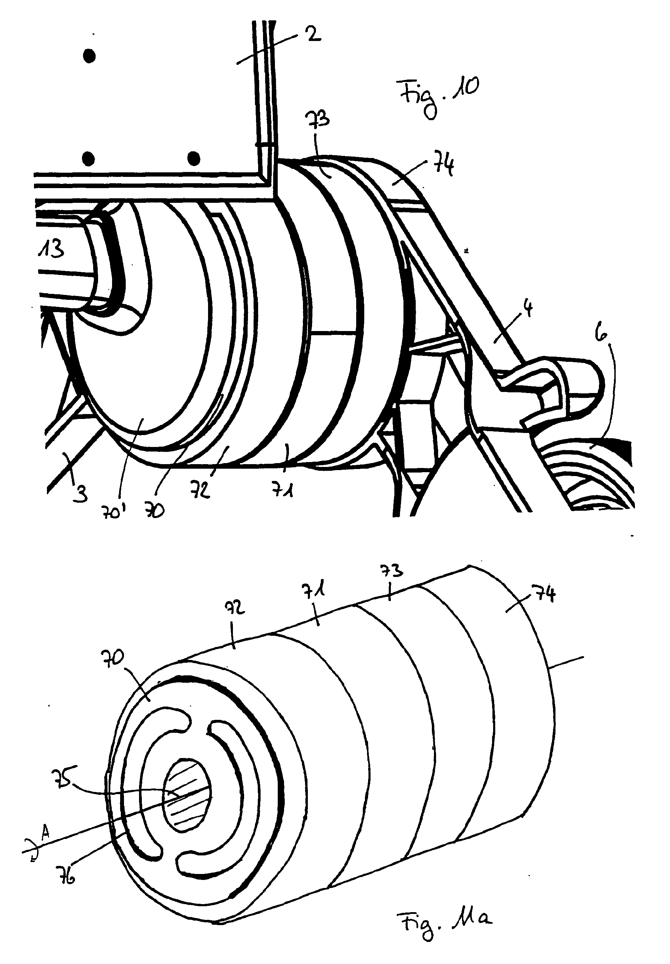

Der Zusammenklappvorgang ist in Fig. 9a - 9d erläutert. In Fig. 9a befindet sich der Kinderwagen in der Betriebsstellung, die Räder 5 sind in Vorwärtsrichtung arretiert. Wenn die beiden Auslösehebel 18 (siehe Fig. 7b) gleichzeitig betätigt werden, werden alle Elemente des Wagens zugleich gelöst.

Nach dem Lösen fällt als erstes der Sitz 1 in den Freiraum zwischen den Längsstreben der Halterung 3 (Fig. 9b). Dort wird der Sitz durch Rastnasen (nicht dargestellt) fixiert, welche an der Halterung 3 befestigt sind. Die Schiebevorrichtung 8 fällt nach vorne auf die Rückenlehne 2. Die Rückenlehne bewegt sich nach hinten, bis die Vorsprünge 17 auf dem Boden aufkommen (Fig. 9c).

Die Halterungen 3 und 4 werden wie weiter unten beschrieben daran gehindert, sich auseinander zu bewegen. Durch die Gewichtskraft des Wagens werden sie auseinander gedrückt und bleiben zunächst in der Betriebsstellung, während der Sitz 1 und die Rückenlehne 2 bereits zusammengeklappt sind.

Durch das Auseinander-Schwenken des Sitzes 1 und der Rückenlehne 2 wird zwischen den beiden Elementen ein Traggriff 13 sichtbar. Erst wenn der Wagen an diesem Griff 13 hoch gehoben wird, klappen die beiden Halterungen 3 und 4 gegen einander. Die Halterung 4 ist um so viel kürzer als Halterung 3, dass die Hinterräder 6 über den Vorderrädern 5 Platz finden (Fig. 8c). Mit Rastnasen (nicht dargestellt), die an der Halterung 3 befestigt sind, wird der Wagen dann in der zusammengeklappten Position fixiert.

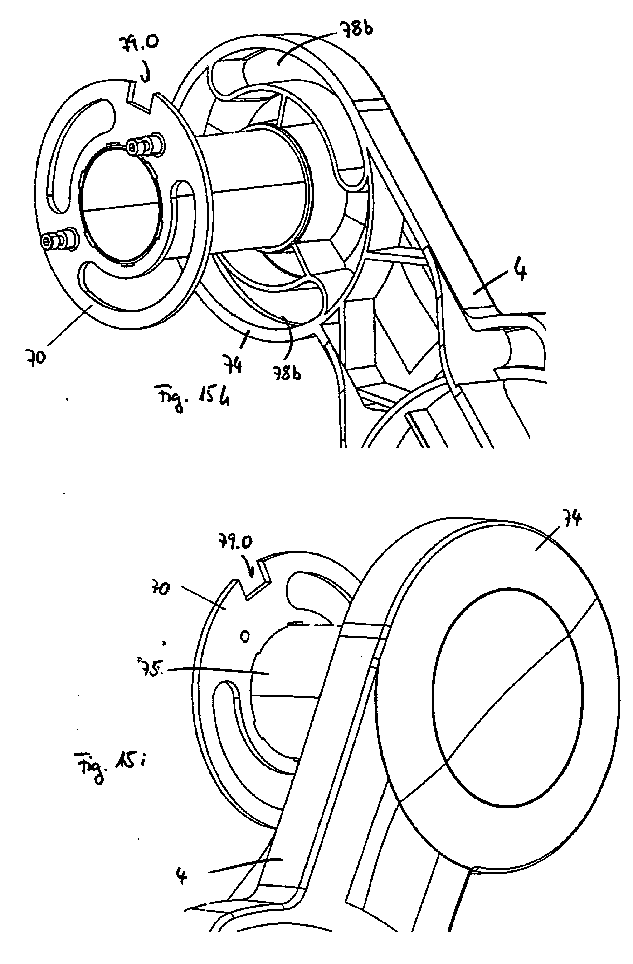

Die Aussenseiten des Wagens im zusammengeklappten Zustand bilden die Rückenlehne 2 (Fig. 8a) und der Sitz 1 mit der Halterung 3 (Fig. 8b). Die Halterung 3 ist leicht gekröpft an einer Scheibe 73 (siehe Fig. 15f, 15g) befestigt. Die gesamte Dicke des Wagens im zusammengeklappten Zustand ist unwesentlich grösser als der Durchmesser der Hinterräder 6.

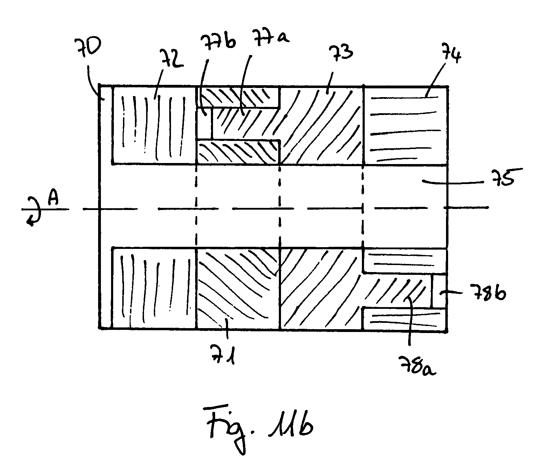

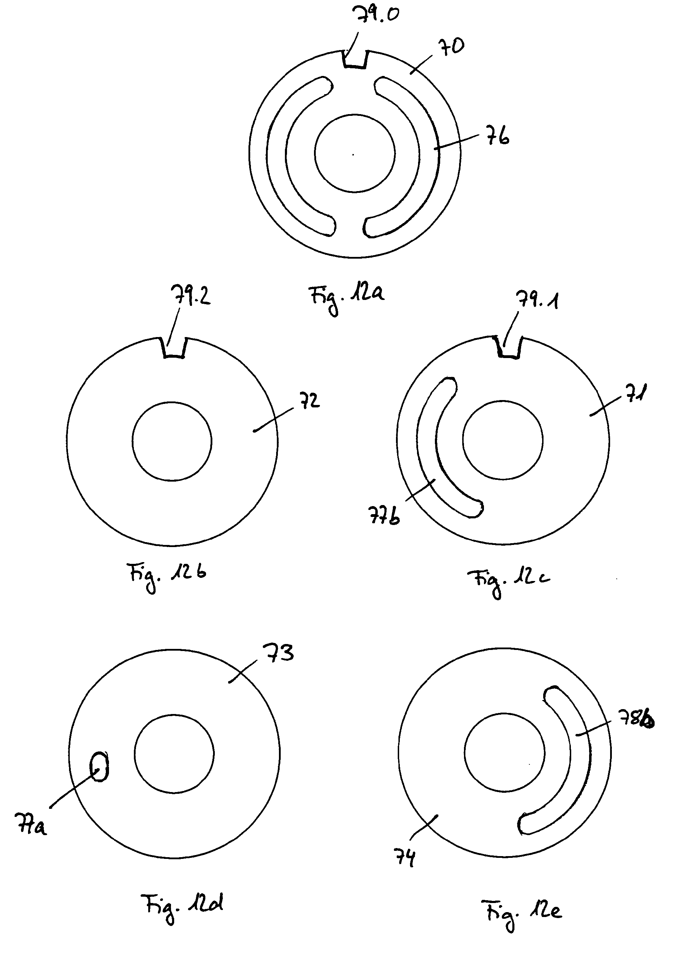

In Figur 10 ist der Klappmechanismus 7 vergrössert dargestellt. Der Klappmechanismus umfasst vier Scheiben aus Kunststoff:
- die Scheibe 74, an der die Halterung 4 für die Hinterräder 6 befestigt ist,
- die Scheibe 73, an der die Halterung 3 für die Vorderräder befestigt ist,
- die Scheibe 71, an der der Sitz 1 befestigt ist, und
- die Scheibe 72, an der die Rückenlehne 2 befestigt ist.
Weiter ist eine fünfte Scheibe 70 erkennbar. Die Scheibe 70 ist aus Aluminium gefertigt, könnte aber auch aus einem anderen stabilen Material bestehen. Aus ästhetischen Gründen ist die Scheibe 70 mit einer Kunststoffverschalung 70' abgedeckt.

In Fig. 11a sind die Scheiben ohne die weiteren Elemente des Wagens abgebildet. Die in Verschalung 70' ist ebenfalls ausgeblendet.

Die Scheibe 70 ist mit einem zylindrischen, konzentrisch angeordneten Zylinderwelle 75 fest verbunden. Die Welle 75 ist aus einem Metallrohr gefertigt. Um die Zylinderwelle 75 sind die übrigen Scheiben 71-73 drehbar gelagert. Die Drehachse A verläuft durch den Mittelpunkt des Zylinderrohrs 75. Die Scheibe 74 ist mit der Welle 75 fest verbunden. Aus Gewichtsgründen ist die Scheibe 70 mit Ausnehmungen 76 versehen.

In Fig. 11b ist ein Schnitt entlang der Achse A aus Fig. 11a dargestellt. Deutlich sichtbar wird in dieser Ansicht die Welle 75, an welcher die Scheiben 71-74 gelagert sind. Die Scheibe 73, an welcher die Halterung 3 für die Vorderräder 5 befestigt ist, weist zwei Stifte 77a und 78a auf. Diese Stifte 77a und 78a werden in den Längsnuten 77b und 78b der Scheiben 71 für den Sitz 1 und 74 für die Halterung 4 der Hinterräder 6 geführt.

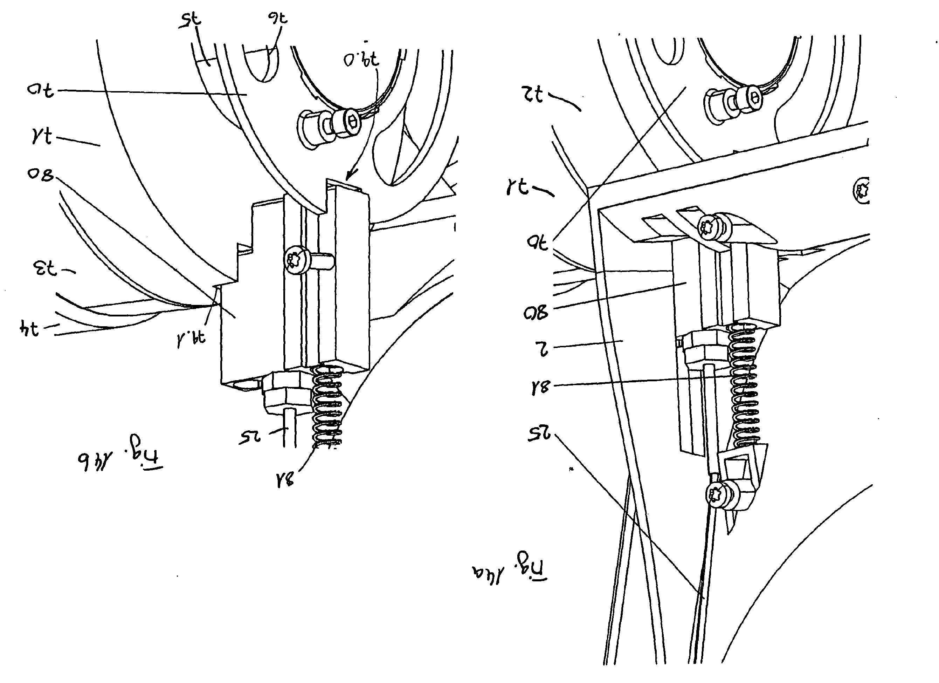

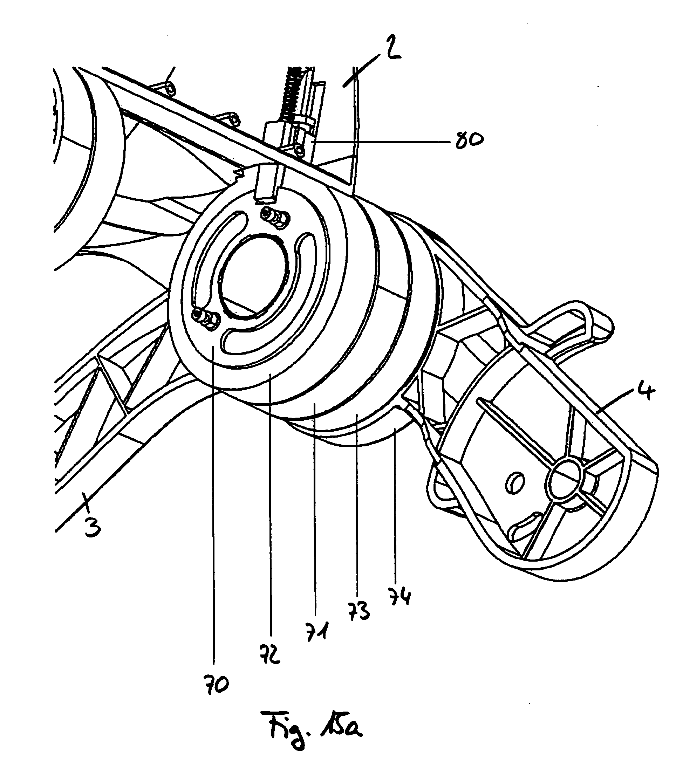

Besser erkennbar ist sind die Längsnuten 77b und 78b in den Fig. 12c und 12e, welche eine Aufsicht der Scheiben 71 und 74 zeigen. In diesen Nuten 77b, 78b werden die Stifte 77a und 78a so geführt, dass der Schwenkwinkel relativ zwischen dem Sitz 1, der Halterung 3 und der Halterung 4 beschränkt ist. Insbesondere sind die Nuten 77b, 78b so gewählt, dass die Halterung 3 in der Betriebsstellung durch die Stifte 77a und 78a in den Nuten 77b und 78b fixiert ist. Das bedeutet, dass der Stift 77a in der Nut 77b am oberen Anschlag ist und der Stift 78a (Fig. 11b) in der Nut 78b am entgegen gesetzten, unteren Anschlag ist, wenn sich der Wagen in Betriebsstellung befindet.

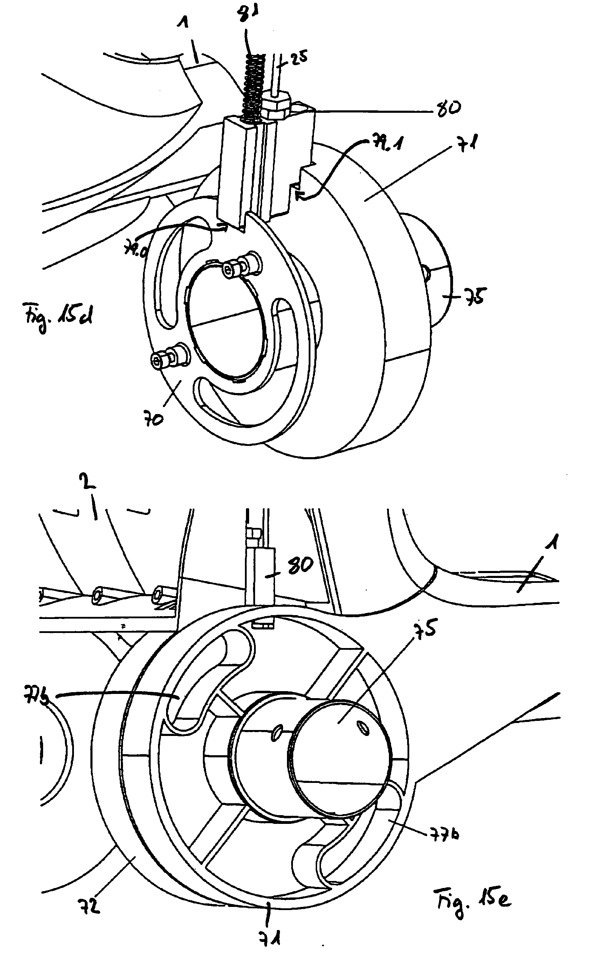

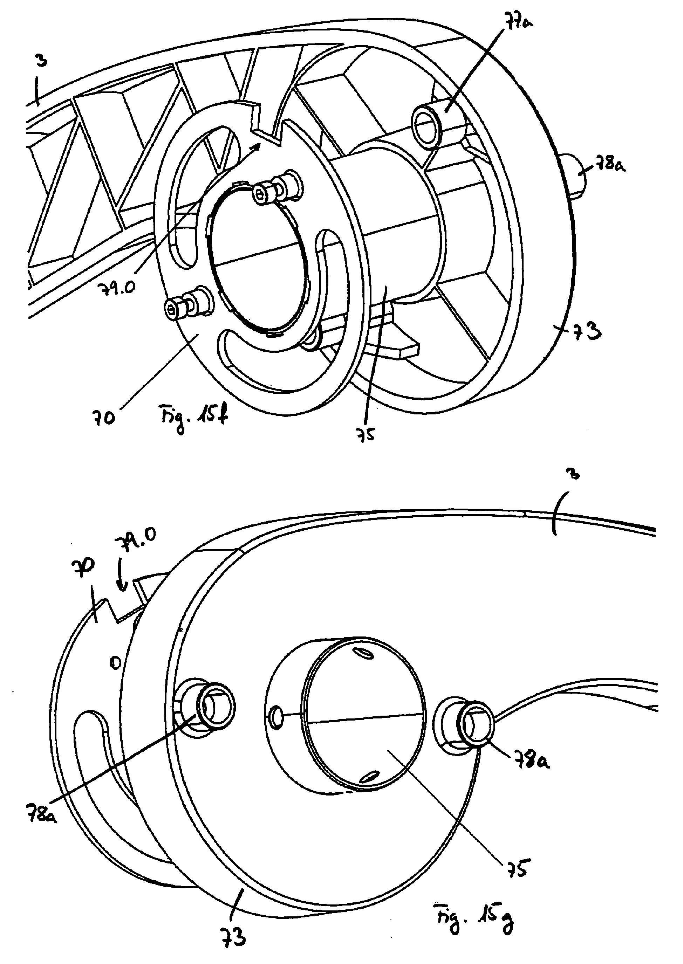

Die übrigen Scheiben werden mit einem Keil 80 (Fig. 14a und 14b) fixiert. Die Scheibe 74 ist dazu fest mit dem Rohr 75 und somit mit der Scheibe 70 verbunden. Die Scheiben 70, 71 und 72 weisen je eine Rastnut 79.0, 79.1 und 79.2 als Gegenstück für den fixierenden Keil 80 auf.

Eine Seite des Auslösemechanismus ist in Fig. 13 dargestellt. Die zweite Seite ist spiegelsymmetrisch an der anderen Seite der Rückenlehne 2 angebracht (Fig. 7b). Damit eine Entriegelung stattfindet, müssen beide Hebel 18 zugleich betätigt werden.

Der Hebel 18 ist an einer Halterung 20 befestigt, welche in einer Schiene 19 geführt wird. An dieser Halterung 20 ist ausserdem eine Fortsetzung 21 der Schiebevorrichtung 8 befestigt. Eine Druckfeder 24 drückt die Halterung 20 gegen die Aussenseite der Rückenlehne 2. Die Druckfeder 24 dient zur zusätzlichen Absicherung der Hebel 18 in der Betriebsstellung gesichert. Es ist dadurch ein gewisser Kraftaufwand notwendig, um die Hebel 18 zu betätigen. Die benötigte Kraft ist so gross, dass ein Kind im Spiel nicht beide Hebel zugleich betätigen kann.

Werden die beiden Hebel 18 gegeneinander, also gegen die Kraft der Druckfeder, in Richtung der Wagenmitte bewegt, wird einerseits ein Bolzen 22 aus einer Nut 23 gelöst. Andererseits wird ein Bowden-Zug 25 angezogen.

Durch das Lösen des Bolzens 22 aus der Nut 23 wird die Schiebevorrichtung 8 gelöst und ist frei um eine Achse durch die Federmitte drehbar. Zum Zusammenklappen des Wagens gibt der Benutzer der Schiebevorrichtung 8 einen kleinen Stoss und lässt sie auf die Innenseite der Rückenlehne 2 fallen.

Der Bowden-Zug 25 wird um den Bolzen 26 gelenkt und ist im Vorsprung 27 an der Halterung 20 befestigt. Die horizontale Zugbewegung des Hebels 18 wird über den Bowden-Zug 25 in eine vertikale Zugbewegung übergeführt. Die Kraft wird zum Keil 80 (Fig. 14a und 14b) geführt. Durch das Bewegen des Hebels wird also der Keil 80 angehoben. Somit werden sämtliche Elemente des Wagens mit einem Auslösemechanismus gelöst.

Der Keil 80 ist in Fig. 14a und 14b sichtbar. In Fig. 14a ist die Rückenlehne 2 mit der Scheibe 72 eingeblendet. In Fig. 14b sind diese beiden Elemente ausgeblendet.

Der Bowden-Zug 25 wird entlang der Rückenlehne 2 zum Keil 80 geführt. Der Keil 80 wird mit einer Druckfeder 81 nach unten in die Rastnuten 79.0, 79.1 und 79.2 der Scheiben 70, 71 und 72 gedrückt. In der Betriebsstellung sind diese Scheiben also durch den Keil fixiert.

Wenn über den Bowden-Zug 25 der Keil 80 angehoben wird, löst er sich aus den Rastnuten 79.0, 79.1 und 79.2 und die Scheiben 71-74 sind gegeneinander drehbar. Der Zusammenklappvorgang wie in Fig. 9a-9d beschrieben wird somit ausgelöst.

In Fig. 15a-15i ist die Klappvorrichtung des Kinderwagens gemäss Fig. 7a-7c in einer perspektivischen Ansicht detailliert dargestellt. Fig. 15a zeigt die eine Hälfte des gesamten Gelenks. Die Kunststoffverschalung 70' ist ausgeblendet. Deutlich sind die Scheiben 70 bis 74 nebeneinander erkennbar. Der Keil 80 hält die Scheiben 70 bis 74 in der Betriebsstellung. Auf der anderen Seite des Kinderwagens befindet sich die gleiche Anordnung spiegelsymmetrisch. Die Scheiben können nur entriegelt werden, wenn der Keil 80 sowohl auf beiden Seiten des Wagens gelöst wird.

In Fig. 15b und 15c ist nur die Scheibe 72 eingeblendet. Fig. 15b stellt die Ansicht der Scheibe 72 von der Aussenseite des Wagens her dar. In Fig. 15c ist die Scheibe 72 von der Innenseite, also von der Mitte des Kinderwagens her, sichtbar. Die Scheibe 72 ist an der Zylinderwelle 75 drehbar gelagert. Die Rückenlehne 2 ist mit der Scheibe 72 fest verbunden. Wenn der Keil 80 aus der Nut 79.2 gezogen wird, wird die Scheibe 72 und somit die Rückenlehne 2 um die Welle 75 geklappt.

In Fig. 15d sind die Scheiben 70 und 71 in einer Ansicht von der Wagenmitte her dargestellt. Scheibe 70 ist mit der Zylinderwelle 75 fest verschweisst. Scheibe 71 ist um die Welle 75 drehbar. Beide Scheiben 70 und 71 werden durch den Keil 80 in den Nuten 79.0 und 79.1 fixiert. Die Druckfeder 81 drückt den Keil 80 in die Nut 79.0 und 79.1. Der Sitz 1, welcher mit der Scheibe 71 fest verbunden ist, wird so in der Betriebsstellung gehalten.

In Fig. 15e sind die Scheiben 71 und 72 von der Aussenseite des Wagens her sichtbar. Der Keil 80 hält beide Scheiben 71 und 72 in Betriebsposition. Deutlich sichtbar sind die Längsnuten 77b, die in der Scheibe 71 angebracht ist. Zur Verbesserung der Stabilität sind zwei Längsnuten 77b vorgesehen, in denen je ein Bolzen 77a (Fig. 15f) läuft.

In Fig. 15f und 15g sind die Scheiben 70 und 73 im Zusammenspiel erkennbar. Fig. 15f zeigt die beiden Scheiben 70 und 73 in einer Ansicht von der Wagenmitte her. Die Scheibe 73 ist mit der Halterung 3 für die Vorderräder 5 verbunden.

Die Scheibe 73 weist keine Rastnut für den Keil auf und wird dementsprechend nicht direkt durch den Keil 80 fixiert. Die Bolzen 77a und 78a auf beiden Seiten der Scheibe 73 dienen zur Begrenzung des Schwenkwinkels der Scheibe 73 einerseits und zur Fixierung der Scheibe 73 andererseits. In der Betriebsstellung befinden sich die Bolzen 77a an einem Anschlag der Längsnuten 77b und die Bolzen 78a am entgegen gesetzten Anschlag der Längsnuten 78b. Die Scheibe 73 ist somit in der Betriebsstellung durch die angrenzenden Scheiben 71 und 74 fixiert, welche wiederum durch den Keil 80 in ihrer Position gehalten werden.

In Fig. 15g sind die Scheiben 70 und 73 von der Aussenseite des Wagens her dargestellt. Deutlich sichtbar sind die beiden Bolzen 78a, welche in den Längsnuten 78b (Fig. 15h) laufen. Ebenfalls gut erkennbar ist, dass die Halterung 3 für die Vorderräder nicht radial von der Drehachse A (Fig. 11a, 11b) absteht, welche durch die Mittelachse des Zylinders 75 bestimmt wird, sondern leicht in tangentialer Richtung verschoben ist. Dadurch kann die Halterung 3 mit hoher Genauigkeit parallel zu den restlichen Elementen des Kinderwagens geklappt werden. Ausserdem ist die Halterung 3 leicht gekröpft an der Scheibe 73 befestigt. Dies sieht man daran, dass die Halterung 3 in einem leichten Bogen zur Scheibe 73 geführt ist.

In Fig. 15h und 15i sind die beiden Scheiben 70 und 74 dargestellt. In Fig. 15h sieht man die beiden Scheiben 70 und 74 in einer Ansicht von der Wagenmitte her, in Fig. 15i sind sie von der Aussenseite des Wagens her dargestellt. Die Scheibe 74 ist fest mit der Welle 75 verbunden, in diesem Beispiel mit ihr vernietet. Somit wird die Scheibe 74 indirekt auch durch den Keil 80 fixiert, welcher in der Nut 79.0 der Scheibe 70 einrastet.

In Fig. 15h sind die Längsnuten 78b deutlich sichtbar. In diesen Längsnuten werden die Bolzen 78a geführt. Dadurch ist der Schwenkwinkel zwischen den beiden Halterungen 3 und 4 begrenzt. Die Längsnuten 78b und die Bolzen 78a sind derart zueinander angeordnet, dass die Bolzen 78a in der Betriebsstellung am Ende der entsprechenden Längsnut 78b anschlagen. Dadurch können die beiden Halterungen 3 und 4 nicht weiter auseinander klappen als dies in der Betriebsstellung vorgesehen ist. Wenn der Keil 80 gelöst wird, sind die Halterungen 3 und 4 nur in einer Richtung gegeneinander schwenkbar. Damit wird verhindert, dass der Wagen während dem zusammenklappen weiter auseinanderklappt als erwünscht.

In Fig. 15i ist weiter erkennbar, dass die Halterung 4 (analog zur Halterung 3, Fig. 15g) nicht radial zur Drehachse A (Fig. 11a, 11b) verläuft, welche durch die Mittelachse des Zylinders 75 definiert ist. Im Vergleich mit Fig. 15g fällt auf, dass die Halterung 4 bezüglich der Halterung 3 auf die gegenüberliegende Seite der Achse A versetzt ist. Werden die beiden Halterungen 3 und 4 gegeneinander geklappt, sind sie nahezu perfekt parallel gegeneinander ausgerichtet. Der Wagen kann somit sehr Platz sparend zusammengeklappt werden.

## Patentansprüche

1. Zusammenklappbarer Kinderwagen mit einem Sitzelement (1), einer Rückenlehne (2), einer ersten Halterung (3) für mindestens ein Vorderrad (5), einer zweiten Halterung (4) für mindestens zwei Hinterräder (6) und einer Schiebevorrichtung (8) und einer Klappvorrichtung (7),
**dadurch gekennzeichnet, dass** das Sitzelement (1), die Rückenlehne (2) sowie die erste (3) und die zweite Halterung (4) jeweils einseitig und um diese schwenkbar an der Klappvorrichtung (7) befestigt sind,
dass die Klappvorrichtung (7) Drehgelenke zum Verschwenken des Sitzelements (1), der Rückenlehne (2) sowie der ersten (3) und zweiten Halterung (4) aufweist, und
dass die Klappvorrichtung (7) eine erste Position aufweist, welche der Betriebsstellung des Kinderwagens entspricht, und eine zweite Position, in welcher der Kinderwagen zusammengeklappt ist.

2. Kinderwagen nach Anspruch 1, **dadurch gekennzeichnet, dass** die Klappvorrichtung in der ersten Position fixierbar ist, und dass für das Zusammenklappen des Kinderwagens aus der ersten in die zweite Position ein Auslösemechanismus für das gleichzeitige Lösen von mindesten zwei Elementen aus der Gruppe des Sitzes (1), der Rückenlehne (2), der ersten (3) und der zweiten Halterung (4) und der Schiebevorrichtung (8) vorgesehen ist.

3. Kinderwagen nach Anspruch 1 oder 2, **dadurch gekennzeichnet, dass** der Auslösemechanismus zum gleichzeitigen Lösen von Sitz (1), Rückenlehne (2), erster (3) und zweiter Halterung (4) und Schiebevorrichtung (8) vorgesehen ist.

4. Kinderwagen nach einem der Ansprüche 2 oder 3, **dadurch gekennzeichnet, dass** der Auslösemechanismus einen Bowden-Zug (25) umfasst.

5. Kinderwagen nach einem der Ansprüche 1 bis 4, **dadurch gekennzeichnet, dass** in der zusammengeklappten Position das Sitzelement (1), die Rückenlehne (2) sowie die erste (3) und zweite Halterung (4) etwa parallel zueinander von der Klappvorrichtung (7) abstehend angeordnet sind.

6. Kinderwagen nach einem der Ansprüche 1 bis 5, **dadurch gekennzeichnet, dass** das Sitzelement (1), die Rückenlehne (2) sowie die erste (3) und zweite Halterung (4) in der Betriebsstellung etwa sternförmig um die Klappvorrichtung (7) herum angeordnet sind.

7. Kinderwagen nach einem der Ansprüche 1 bis 6, **dadurch gekennzeichnet, dass** in der Betriebsstellung die Winkel zwischen dem Sitzelement (1), der Rückenlehne (2) und der ersten (3) und zweiten Halterung (4) stufenlos fixierbar oder zwischen einer vorgegebenen Anzahl von Positionen wählbar sind.

8. Kinderwagen nach einem der Ansprüche 1 bis 7, **dadurch gekennzeichnet, dass** die Drehgelenke des Sitzelements (1), der Rückenlehne (2) sowie der ersten (3) und zweiten Halterung (4) auf einer Drehachse fluchtend angeordnet sind.

9. Kinderwagen nach einem der Ansprüche 1 bis 7, **dadurch gekennzeichnet, dass** die Drehgelenke des Sitzelements (1), der Rückenlehne (2) sowie der ersten (3) und zweiten Halterung (4) auf zwei oder drei parallel verlaufenden Drehachsen fluchtend angeordnet sind.

10. Kinderwagen nach einem der Ansprüche 1 bis 9, **dadurch gekennzeichnet, dass** ein Anschlag zur Begrenzung der Schwenkbewegung für wenigstens eines der Elemente aus der Gruppe von Sitz (1), Rückenlehne (2), erster (3) und zweiter Halterung (4) vorgesehen ist.

11. Kinderwagen nach einem der Ansprüche 1 bis 10, **dadurch gekennzeichnet, dass** der Kinderwagen Mittel zum Fixieren des Kinderwagens in der zusammengeklappten Position aufweist.

12. Kinderwagen nach einem der Ansprüche 1 bis 11, **dadurch gekennzeichnet, dass** an der Rückenlehne (2) Vorsprünge (17) zum Abstützen des Kinderwagens in der zusammengeklappten Betriebsstellung vorgesehen sind.

13. Kinderwagen nach einem der Ansprüche 1 bis 12, **dadurch gekennzeichnet, dass** mindestens ein Traggriff (13) zum Tragen des Wagens in der zusammengeklappten Position vorgesehen ist.

14. Kinderwagen nach einem der Ansprüche 1 bis 12, **dadurch gekennzeichnet, dass** seitlich am Sitzelement (1), an der Rückenlehne (2) oder an einer der Halterungen (3,4) mindestens ein Traggriff (13) zum Tragen des Wagens in der zusammengeklappten Position befestigt ist.

15. Kinderwagen nach einem der Anspüche 1 bis 14, **dadurch gekennzeichnet, dass** an der ersten Halterung (3) eine Fussstütze (9) angebracht ist.

16. Kinderwagen nach einem der Ansprüche 1 bis 15, **dadurch gekennzeichnet, dass** die Schiebevorrichtung(8) an der Rückenlehne (2) befestigt ist.

17. Kinderwagen nach einem der Ansprüche 1 bis 15, **dadurch gekennzeichnet, dass** die Schiebevorrichtung(8) schwenkbar an der Klappvorrichtung (7) befestigt ist.

18. Kinderwagen nach einem der Ansprüche 1 bis 17, **dadurch gekennzeichnet, dass** die Schiebevorrichtung(8) in der Länge verstellbar ist.

19. Kinderwagen nach einem der Ansprüche 1 bis 18, **dadurch gekennzeichnet, dass** in der zusammengeklappten Position die Unterfläche des Sitzelements (1) und erste Halterung (3) die Aussenseiten des Wagens sind.

20. Kinderwagen nach Anspruch 19, **dadurch gekennzeichnet, dass** das Sitzelement (1) eine aufklappbare oder ausfahrbare Verlängerung (10) besitzt.

21. Kinderwagen nach einem der Ansprüche 1 bis 20, **dadurch gekennzeichnet, dass** die Vorder- (5) und/oder Hinterräder (6) um etwa 90° gegen den Wagen schwenkbar sind.

22. Kinderwagen nach einem der Ansprüche 1 bis 21, **dadurch gekennzeichnet, dass** die Vorder- (5) und/oder Hinterräder (6) des Wagens in der zusammengeklappten Position über die restlichen Elemente hinausragend angeordnet und zum Ziehen oder Stossen des Wagens verwendbar sind.

23. Kinderwagen nach einem der Ansprüche 1 bis 22, **dadurch gekennzeichnet, dass** für den Wagen in der zusammengeklappten Position Schutzüberzüge (14) vorgesehen sind.
